# EUROPEAN PATENT APPLICATION

(11) **EP 4 624 898 A1**
(43) Date of publication of application: **01.10.2025**
(21) Application number: 25157923.1
(22) Date of filing: 14.02.2025
(51) Int. Cl.: G01N 17/02, G01N 17/00

(54) **CORROSION RESISTANCE TEST METHOD, CORROSION RESISTANCE TEST APPARATUS, AND CORROSION RESISTANCE TEST PROGRAM FOR COATED METAL MATERIAL, AND RECORDING MEDIUM**

(30) Priority: 28.03.2024 JP 2024053907
(71) Applicant: MAZDA MOTOR CORPORATION, Hiroshima 730-8670 (JP)
(72) Inventor: Sasaki, Katsunobu, Aki-gun, Hiroshima, 730-8670 (JP); Asada, Teruaki, Aki-gun, Hiroshima, 730-8670 (JP); Ezaki, Tatsuya, Aki-gun, Hiroshima, 730-8670 (JP)
(74) Representative: Thoma, Michael

(57) **Abstract**

A corrosion resistance test method for a coated metal material (1) including a metal base (2, 3) and a surface treatment film (4) provided on the metal base (2, 3), the method comprising: a preparation step (S1) of arranging one or two containers (11) holding a water-containing material (6) such that the water-containing material (6) is in contact with the surface treatment film (4) at a test target portion (E) of the coated metal material (1) and one electrode (12) in contact with the water-containing material (6) in the one container (11) or two electrodes (12) in contact with the respective water-containing materials (6) in the two containers (11), and electrically connecting, through an external circuit (7), the electrode (12) and the metal base (2, 3) to each other or the two electrodes (12) to each other; a current supply step (S3) of applying a DC constant current or a DC constant voltage, with a current supplier (8) provided on the external circuit (7), between the electrode (12) serving as an anode and the metal base (2, 3) serving as a cathode or between one of the two electrodes (12) serving as an anode and the other one of the two electrodes (12) serving as a cathode to cause corrosion of the coated metal material (1) to progress; and a calculation step (S4) of calculating a progress degree of the corrosion based on at least one of a temporal change in a current value, a temporal change in a voltage value, or a temporal change in a resistance value, where each temporal change occurs between the electrode (12) and the metal base (2, 3) or between the one of and the other one of the two electrodes (12) when the DC constant current or the DC constant voltage is applied in the current supply step (S3).

## Description

### BACKGROUND

The present disclosure relates to a corrosion resistance test method, a corrosion resistance test apparatus, and a corrosion resistance test program for a coated metal material, and a recording medium.

### BACKGROUND ART

As a technique for evaluating the properties of a coating film, an accelerated corrosion test such as a combined cycle test or a salt spray test has been performed. Such an accelerated corrosion test requires several months for evaluation. It is thus difficult to simply evaluate, for example, the states of coating films to be coated on steel sheets made of different constituent materials under different baking conditions and to rapidly provide optimum coating conditions. Thus, in material development, process control in coating factories, and quality control related to rust prevention for vehicles, it has been desired to establish a quantitative evaluation method for rapidly and simply evaluating corrosion resistance of coated steel sheets.

For example, Japanese Patent No. 6801805 discloses a measurement method for measuring a size of swelling of a surface treatment film formed in a coated metal material that includes a metal base and the surface treatment film provided on the metal base. The method includes the steps of arranging a water-containing material in contact with the swelling and an electrode in contact with the water-containing material, and electrically connecting, through an external circuit, the electrode and the metal base to each other; applying a constant voltage, with the external circuit, between the electrode serving as a cathode and the metal base serving as an anode, and measuring a current value flowing therebetween; and calculating a size of the swelling, based on the current value measured and a correlation between the current value and the size of the swelling, determined on an exploratory basis in advance.

The document shows that the size of swelling of the surface treatment film can be measured using the electrochemical technique, thus enabling the process of the test to be simplified and a measurement error to be reduced.

### SUMMARY

In the above method, although the size of swelling of the surface treatment film can be measured using the electrochemical technique, the size of swelling needs to be measured in another process after an experiment for progress of corrosion, i.e., progress of the swelling. Immediately after the experiment for progress of the swelling, air bubbles might remain inside the swelling. Thus, it is necessary to measure the size of swelling after the remaining air bubbles are replaced with the water-containing material, and during this, the swelling might further progress. Accordingly, in view of shortening the testing time for the entire corrosion resistance test and further reducing the measurement errors, the method still can be improved.

An object of the present disclosure is to further shorten the testing time and reduce the measurement errors in the corrosion resistance test for the coated metal material.

In order to achieve the above object, an aspect of a corrosion resistance test method for a coated metal material as disclosed herein is
a corrosion resistance test method for a coated metal material including a metal base and a surface treatment film provided on the metal base, the method comprising:
a preparation step of arranging one or two containers holding a water-containing material such that the water-containing material is in contact with the surface treatment film at a test target portion of the coated metal material and one electrode in contact with the water-containing material in the one container or two electrodes in contact with the respective water-containing materials in the two containers, and electrically connecting, through an external circuit, the electrode and the metal base to each other or the two electrodes to each other;
a current supply step of applying a DC constant current or a DC constant voltage, with a current supplier provided on the external circuit, between the electrode serving as an anode and the metal base serving as a cathode or between one of the two electrodes serving as an anode and the other one of the two electrodes serving as a cathode to cause corrosion of the coated metal material to progress; and
a calculation step of calculating a progress degree of the corrosion based on at least one of a temporal change in a current value, a temporal change in a voltage value, or a temporal change in a resistance value, where each temporal change occurs between the electrode and the metal base or between the one of and the other one of the two electrodes when the DC constant current or the DC constant voltage is applied in the current supply step.

It is generally known that an anode reaction (oxidation reaction) of generating free electrons by melting (ionizing) metal that is in contact with water and a cathode reaction (reduction reaction) of generating hydroxide ions OH⁻ from dissolved oxygen in water by the free electrons occur together, whereby metal corrosion progresses.

**In** this configuration, a current is supplied between the electrode and the metal base, or between one of and the other one of the two electrodes, as the anode and the cathode, respectively. For the current supply between the electrode serving as an anode and the metal base serving as a cathode, the cathode reaction progresses in a contact portion between the water-containing material and the metal base when the water-containing material permeating into the surface treatment film reaches the metal base. For one of the two electrodes serving as the anode and the other one of the two electrodes serving as the cathode, the cathode reaction progresses in a contact portion between the metal base and the water-containing material on the side closer to the electrode serving as the anode. **In** any case, electrolysis of water also progresses and hydrogen gas is generated, depending on a current supply condition, that is, under a current supply condition where a voltage equal to or higher than a theoretical voltage (1.23 V in a case where a system temperature is 25°C) at which electrolysis of water occurs to generate hydrogen, or a current requiring such a voltage, is applied.

As the cathode reaction progresses, the area around the contact portion between the water-containing material and the metal base becomes an alkaline environment due to generation of OH⁻. This damages an under-treated surface (chemically converted surface) of the metal base, thereby reducing adherence of the surface treatment film (simply reducing adherence between the metal base and the surface treatment film for no treatment performed on the surface of the metal base). Accordingly, the surface treatment film is lifted in the contact portion and swells around the damaged portion. The surface treatment film with a reduced adherence to the metal base in the alkaline environment is further lifted by the hydrogen gas generated due to electrolysis of water and reduction of H⁺. This causes progression of the swelling of the surface treatment film. Such progress of the cathode reaction and occurrence and progress of the swelling of the surface treatment film are accelerated reproduction of actual corrosion of the coated metal material. That is, "causing corrosion of the coated metal material to progress" in this specification refers to "causing the swelling of the surface treatment film to occur and progress." Accordingly, for example, by checking the occurrence status and the progress degree of the swelling of the surface treatment film that has occurred in the contact portion, the progress degree of corrosion of the coated metal material can be determined.

As a result of intensive studies, the inventors of the present application have found that when a DC constant current or a DC constant voltage is applied between the electrode and the metal base or between one of and the other one of the two electrodes to cause corrosion of the coated metal material to progress, there is a correlation between and the progress degree of the corrosion and at least one of a temporal change in a current value, a temporal change in a voltage value, or a temporal change in a resistance value, where each temporal change occurs between the electrode and the metal base or between the one of and the other one of the two electrodes.

That is, in this configuration, the progress degree of the corrosion is calculated based on at least one of the temporal change in the current value, the temporal change in the voltage value, or the temporal change in the resistance value, where each temporal change occurs between the electrode and the metal base or between the one of and the other one of the two electrodes through current supply during the acceleration of corrosion. Thus, the corrosion acceleration and the calculation of the progress degree of corrosion can be achieved together. This helps shorten the testing time, and also reduce the measurement errors occurring in a typical test method. Thus, the reliability and versatility of the corrosion resistance test can be improved.

In this specification, "the test target portion of the coated metal material" means a portion of the coated metal material that corresponds to the contact region between the water-containing material and the surface treatment film.

Preferably, in the calculation step, the progress degree of corrosion is calculated based on at least one of a fluctuation range of unevenness in a waveform along the temporal change; a difference between values at any two points along the temporal change; and an integrated value from a start of current supply to an end of current supply along the temporal change.

As a result of intensive studies, the inventors of the present application have found that there is a correlation between the progress degree of corrosion and at least one of the fluctuation range of unevenness, the difference between the two points, or the integrated value. According to this configuration, the progress degree of corrosion is calculated based on at least one of the fluctuation range of unevenness, the difference between the two points, or the integrated value, and thus the accuracy and reliability of the test can be improved.

In this specification, "the fluctuation range" means the range of a value that fluctuates, i.e., the peak-to-peak amplitude (double amplitude).

Preferably, in the current supply step, progress of the corrosion of the coated metal material appears as swelling of the surface treatment film, and
in the calculation step, the progress degree of corrosion is calculated based on a correlation among at least one of the fluctuation range of unevenness, the difference between the values at the two points, or the integrated value; at least one of the fluctuation range of unevenness acquired in advance, the difference between the values at the two points acquired in advance, or the integrated value acquired in advance; and a size of swelling of the surface treatment film or a rate at which the swelling progresses.

If the progress of corrosion of the coated metal material appears as swelling of the surface treatment film, the progress degree of corrosion is expressed by the size of swelling of the surface treatment film or the rate at which the swelling progresses (corrosion progress rate). According to this configuration, the progress degree of corrosion is calculated based on at least one of the fluctuation range of unevenness, the difference between the two points, or the integral; and the correlation, and thus the accuracy and reliability of the test can be improved.

In this specification, "the size of swelling of the surface treatment film" refers to a swelling diameter or a swelling area, or a peeling diameter or a peeling area. The "swelling diameter" and the "swelling area" refer to the diameter and area of the swollen portion of the surface treatment film, respectively. The "peeling diameter" and the "peeling area" refer to a diameter and an area of a peeled portion which is an exposed surface of the metal base exposed by peeling the swollen portion of the surface treatment film after the corrosion resistance test is performed. The size of swelling of the surface treatment film is obtained by taking a photograph of the swollen portion or the peeled portion of the surface treatment film using, for example, a camera, a digital microscope, or the like; and measuring, for example, the diameter or area of the swollen portion or the peeled portion on the obtained image data.

In this specification, the "rate at which the swelling of the surface treatment film progresses" means the corrosion progress rate described later. This is a value obtained by dividing the size of swelling of the surface treatment film (preferably, the difference between the size of swelling of the surface treatment film and the size of the damaged portion, if the coated metal material before the current is applied has a damaged portion described later) by the current supply time.

Preferably, the coated metal material has, at the test target portion, one or two damaged portions reaching the metal base through the surface treatment film, and the one or two containers are disposed such that the water-containing material is in contact with the one damaged portion or the two damaged portions.

In general, a coated metal material with a surface treatment film starts to corrode after a corrosion factor such as salt water has permeated into the surface treatment film and reached the metal base. Specifically, the process of corrosion of the coated metal material is divided into a stage until occurrence of corrosion and a stage in which corrosion progresses. The corrosion can be evaluated through determining a period until corrosion starts (i.e., corrosion resistance period) and a rate at which corrosion progresses (corrosion progress rate).

For the coated metal material having the damaged portion reaching the metal base through the surface treatment film as in this configuration, the water-containing material serving as a corrosion factor and disposed in contact with the damaged portion enters the inside of the damaged portion and reaches an exposed portion of the metal base. Upon contact of the water-containing material with the exposed portion of the metal base, corrosion starts in the exposed portion. Then, current supply causes swelling of the surface treatment film to occur and progress around the exposed portion where the cathode reaction progresses. That is, the damaged portion provided in the coated metal material allows creation of a simulated state of the end of the corrosion resistance period out of the process of corrosion of the coated metal material. In this way, the time from the start of current supply to occurrence of the swelling of the surface treatment film can be shortened.

In this specification, the "size of the damaged portion" refers to the size of the damaged portion in a plan view, and is, for example, the diameter or area of the damaged portion. For example, for a circular damaged portion in a plan view, the area of the damaged portion is given by the area of a circle. The diameter of the damaged portion is given by the maximum width of the damaged portion. The size of the damaged portion is obtained by taking a photograph of an area of the surface of the surface treatment film around the damaged portion using, for example, a camera, a digital microscope, or the like; and measuring, for example, the diameter or area of the damaged portion on the obtained image data.

Preferably, in the current supply step, the progress of corrosion of the coated metal material appears as swelling of the surface treatment film caused around the damaged portion, and
the progress degree of corrosion is expressed by a size of swelling of the surface treatment film or a rate at which the swelling progresses.

In this configuration, the progress degree of corrosion of the coated metal material is expressed by the size of swelling of the surface treatment film or the rate at which the swelling progresses (corrosion progress rate). According to this configuration, the corrosion acceleration and the calculation of the size of swelling of the surface treatment film or the calculation of the corrosion progress rate can be achieved together, which can advantageously shorten the testing time and also can reduce the measurement errors.

Preferably, the surface treatment film is a resin coating film.

The coated metal material including the metal base on which the resin coating film is formed as the surface treatment film is suitable as a target for the corrosion resistance test because corrosion is likely to progress during current supply.

An aspect of a corrosion resistance test apparatus for a coated metal material as disclosed herein is
a corrosion resistance test apparatus for a coated metal material including a metal base and a surface treatment film provided on the metal base, the apparatus comprising:
one or two containers holding a water-containing material such that the water-containing material is in contact with the surface treatment film at a test target portion of the coated metal material;
one electrode in contact with the water-containing material in the one container or two electrodes in contact with the respective water-containing materials in the two containers;
an external circuit electrically connecting the electrode and the metal base to each other or the two electrodes to each other;
a current supplier provided on the external circuit to apply a DC constant current or a DC constant voltage between the electrode serving as an anode and the metal base serving as a cathode or between one of the two electrodes serving as an anode and the other one of the two electrodes serving as a cathode to cause corrosion of the coated metal material to progress; and a calculation unit configured to calculate a progress degree of the corrosion based on at least one of a temporal change in a current value, a temporal change in a voltage value, or a temporal change in a resistance value, where each temporal change occurs between the electrode and the metal base or between the one of and the other one of the two electrodes when the DC constant current or the DC constant voltage is applied.

According to this configuration, the corrosion acceleration and the calculation of the progress degree of corrosion can be achieved together. This helps shorten the testing time, and also reduce the measurement errors occurring in a typical test method. Thus, the reliability and versatility of the corrosion resistance test can be improved.

Preferably, the calculation unit calculates the progress degree of corrosion based on at least one of a fluctuation range of unevenness in a waveform along the temporal change; a difference between values at any two points along the temporal change; and an integrated value from a start of current supply to an end of current supply along the temporal change. This can improve the reliability and versatility of the corrosion resistance test.

Preferably, progress of the corrosion of the coated metal material appears as swelling of the surface treatment film, and
the calculation unit calculates the progress degree of corrosion based on a correlation among at least one of the fluctuation range of unevenness, the difference between the values at the two points, or the integrated value; at least one of the fluctuation range of unevenness acquired in advance, the difference between the values at the two points acquired in advance, or the integrated value acquired in advance; and a size of swelling of the surface treatment film or a rate at which the swelling progresses. This can improve the accuracy and reliability of the corrosion resistance test.

An aspect of a program for a corrosion resistance test of a coated metal material as disclosed herein is
a program for a corrosion resistance test of a coated metal material including a metal base and
a surface treatment film provided on the metal base,
the corrosion resistance test including:
   a preparation step of arranging one or two containers holding a water-containing material such that the water-containing material is in contact with the surface treatment film at a test target portion of the coated metal material and one electrode in contact with the water-containing material in the one container or two electrodes in contact with the respective water-containing materials in the two containers, and electrically connecting, through an external circuit, the electrode and the metal base to each other or the two electrodes to each other;
   a current supply step of applying a DC constant current or a DC constant voltage, with a current supplier provided on the external circuit, between the electrode serving as an anode and the metal base serving as a cathode or between one of the two electrodes serving as an anode and the other one of the two electrodes serving as a cathode to cause corrosion of the coated metal material to progress; and
   a calculation step of calculating a progress degree of the corrosion based on at least one of a temporal change in a current value, a temporal change in a voltage value, or a temporal change in a resistance value, where each temporal change occurs between the electrode and the metal base or between the one of and the other one of the two electrodes when the DC constant current or the DC constant voltage is applied in the current supply step,
   the program causing a computer to execute a process of at least the calculation step.

The highly reliable corrosion resistance test can be performed by the computer executing the processes of the calculation step.

An aspect of a recording medium disclosed herein is a computer-readable recording medium in which the program of the corrosion resistance test of the coated metal material is recorded.

As described above, according to the present disclosure, the corrosion acceleration and calculation of the progress degree of corrosion can be achieved together. This helps shorten the testing time, and also reduce the measurement errors occurring in a typical test method. Thus, the reliability and versatility of the corrosion resistance test can be improved.

### BRIEF DESCRIPTION OF DRAWINGS

FIG. 1 illustrates an example corrosion resistance test apparatus according to a first embodiment.
FIG. 2 illustrates a corrosion resistance test method according to the first embodiment.
FIG. 3 shows graphs each showing a temporal change in the resistance value of a test piece of the third or ninth experimental examples.
FIG. 4 illustrates a mechanism for generating unevenness in a waveform along a temporal change in the resistance value.
FIG. 5 is a graph showing the relationship between the fluctuation range of unevenness and the size of swelling for the test pieces of the first to tenth experimental examples.
FIG. 6 shows graphs each showing a temporal change in the resistance value of a test piece of the third experimental example.
FIG. 7 illustrates an example corrosion resistance test apparatus according to a second embodiment.

### DETAILED DESCRIPTION

Hereinafter, embodiments of the present disclosure will be described in detail with reference to the drawings. The following description of preferred embodiments is merely an example in nature, and is not intended to limit the scope, applications or use of the present disclosure.

### (First Embodiment)

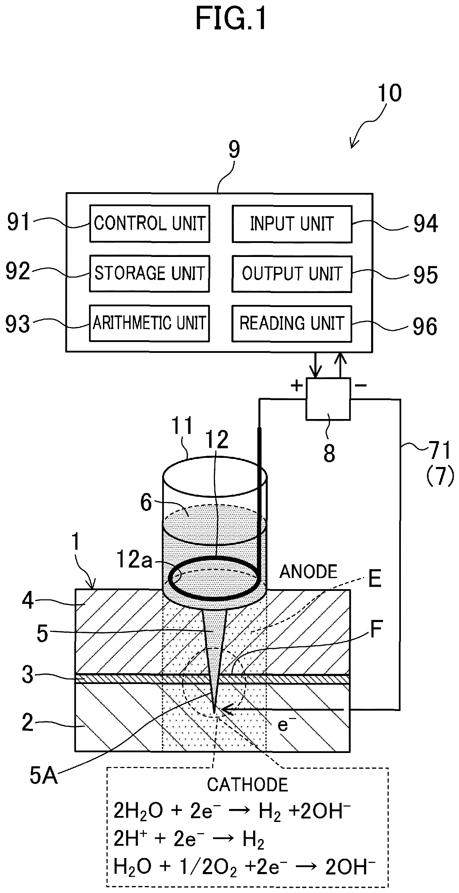

FIG. 1 is a diagram illustrating the principle of a corrosion resistance test method and an example of a corrosion resistance test apparatus according to the present embodiment. In this figure, the reference numeral 1 denotes a coated metal material, and the reference numeral 10 denotes the corrosion resistance test apparatus.

### <Coated Metal Material>

As illustrated in FIG. 1, the coated metal material 1 used for the corrosion resistance test according to the present embodiment includes a metal base on which a surface treatment film is provided.

The metal base may be, for example, a steel material for forming an electric household appliance, a building material, or an automobile part, such as a cold-rolled steel plate (SPC), a galvanized alloy steel sheet (GA), a high-tensile strength steel sheet, or a hot stamping material, or may be a light alloy material. The metal base is preferably a steel sheet for an automobile member. The metal base may include, on its surface, a chemical conversion coating (phosphate coating (e.g., zinc phosphate coating), chromate coating, or the like).

A resin coating film is a resin coating film formed by using a resin-based coating material and is preferably an electrodeposition coating film. The coated metal material including the metal base on which the resin coating film is provided as a surface treatment film is suitable as a test material for the corrosion resistance test because of easily corroding during current supply. Specific examples of the resin coating film include cationic electrodeposition coating films (undercoat films) such as an epoxy resin, an acrylic resin, and the like.

The coated metal material may include a multilayer film as the surface treatment film consisting of two or more layers. Specifically, for example, for the surface treatment film being the resin coating film, the coated metal material may be a multilayered coating film obtained by overlaying a topcoat film on an electrodeposition coating film; a multilayered coating film obtained by overlaying an intermediate coating film and a topcoat film on an electrodeposition coating film; or the like.

The intermediate coating film serves to secure the reliable finishing and chipping resistance of the coated metal material and also serves to improve the adherence between the electrodeposition coating film and the topcoat film. The topcoat film secures the reliable color, finishing, and weather resistance of the coated metal material. Specifically, for example, these coating films may be made of a paint containing: a base resin, such as a polyester resin, an acrylic resin, and an alkyd resin; and a crosslinking agent, such as a melamine resin, a urea resin, and a polyisocyanate compound (including a blocked polyisocyanate compound).

A coated metal material 1 including: a metal base including a steel sheet 2 and a chemical conversion coating 3 on the steel sheet 2; and an electrodeposition coating film 4 (resin coating film) provided as a surface treatment film on the metal base will be described below as an example.

As illustrated in FIG. 1, the coated metal material 1 has, at its test target portion E, one damaged portion 5 reaching the steel sheet 2 through the electrodeposition coating film 4 and the chemical conversion coating 3. The damaged portion 5 may be provided, or may not be provided. The damaged portion 5 may be artificially formed or naturally formed. A plurality of damaged portions 5 may be formed apart from each other. In this case, the one damaged portion 5 means one of the damaged portions 5.

### <Water-Containing Material>

A water-containing material 6 contains water and a supporting electrolyte, and functions as a conductive material. The water-containing material 6 may be a muddy material further containing a clay mineral. For the water-containing material 6 further containing a clay mineral, ions and water in the water-containing material 6 easily permeate through the electrodeposition coating film 4 in the holding step S2 and current supply step S3, which will be described later.

The supporting electrolyte is a salt and is for imparting sufficient electrical conductivity to the water-containing material 6. Specifically, for example, the supporting electrolyte may be at least one salt selected from sodium chloride, sodium sulfate, calcium chloride, calcium phosphate, potassium chloride, potassium nitrate, potassium hydrogen tartrate, and magnesium sulfate. The supporting electrolyte may be particularly preferably at least one salt selected from sodium chloride, sodium sulfate, and calcium chloride. The water-containing material 6 contains the supporting electrolyte preferably at 1 mass% or more to 20 mass% or less, more preferably at 3 mass% or more to 15 mass % or less, particularly preferably at 5 mass% or more to 10 mass% or less.

The clay mineral is for making the water-containing material 6 into the muddy material and promoting movement of ions and permeation of water into the electrodeposition coating film 4 to accelerate progress of corrosion in the current supply step S3. The clay mineral may be a layered silicate mineral or zeolite, for example. The layered silicate mineral may be, for example, at least one selected from kaolinite, montmorillonite, sericite, illite, glauconite, chlorite, and talc. Out of these minerals, kaolinite may be particularly preferably employed. The water-containing material may contain the clay mineral preferably at 1 mass% or more to 70 mass% or less, more preferably at 10 mass% or more to 50 mass% or less, particularly preferably at 20 mass% or more to 30 mass% or less. The water-containing material 6 being the muddy material allows the water-containing material 6 itself to be provided even on a non-horizontal surface of the electrodeposition coating film 4.

The water-containing material 6 may contain an additive in addition to water, the supporting electrolyte, and the clay mineral. Specific examples of the additive include organic solvents such as acetone, ethanol, toluene, and methanol; and substances for improving wettability of the coating film. These organic solvents, substances, and the like can also function to promote permeation of water into the electrodeposition coating film 4. Any of these organic solvents, substances, and the like may be added to the water-containing material 6 as a substitute for the clay mineral. For the water-containing material 6 containing the organic solvent, the content of the organic solvent is preferably 5% or more and 60% or less relative to the content of water in terms of volume ratio. The volume ratio is preferably 10% or more to 40% or less, more preferably 20% or more to 30% or less.

### <Corrosion Resistance Test Apparatus for Coated Metal Material>

As illustrated in FIG. 1, an exemplary corrosion resistance test apparatus 10 according to the present embodiment includes a container 11, an electrode 12, an external circuit 7, a current supplier 8 (power supply unit, detection unit), and a control device 9 (calculation unit).

### <<Container>>

The container 11 is placed on the electrodeposition coating film 4 of the coated metal material 1 through a seal material (not illustrated) for preventing liquid leakage. The water-containing material 6 is in contact with the surface of the electrodeposition coating film 4 at the test target portion E, while being in the container 11. That is, the container 11 holds the water-containing material 6 so that the water-containing material 6 is in contact with the electrodeposition coating film 4 at the test target portion E.

The container 11 is not limited to a particular shape, and may be formed in a tubular shape such as a cylindrical shape and a polygonal tubular shape. The container 11 may be made from a resin material such as an acrylic resin, an epoxy resin, and aromatic polyether ether ketone (PEEK); from ceramic; and particularly preferably from a resin material such as an acrylic resin, an epoxy resin, and aromatic polyether ether ketone (PEEK). This allows reduction in the weight and cost of the corrosion resistance test apparatus 10 while securing reliable insulation between the container 11 and the outside.

The seal material is a sheet-shaped seal material made from a silicone resin, for example, and is used to improve adherence between the container 11 and the electrodeposition coating film 4 and fill a gap therebetween when the container 11 is placed on the coated metal material 1. This can effectively reduce leakage of the water-containing material 6 from the gap between the container 11 and the electrodeposition coating film 4. Although the seal material does not have to be provided, it is preferable to provide the seal material in order to sufficiently reduce leakage of the water-containing material 6.

### <<Electrode>>

The electrode 12 is disposed near the electrodeposition coating film 4 of the coated metal material 1 and is spaced apart from the electrodeposition coating film 4. The water-containing material 6 is disposed between and is in contact with the electrodeposition coating film 4 and the electrode 12. Specifically, at least the distal end of the electrode 12 is embedded in the water-containing material 6 and is in contact with the water-containing material 6.

The electrode 12 may be an electrode generally used in electrochemical measurement, and specifically, for example, may be a carbon electrode, a platinum electrode, or the like.

The shape of the electrode 12 may be a shape generally used in electrochemical measurement, such as a rod shape or a plate shape. Further, the electrode 12 may be, for example, a perforated electrode of which the distal end has at least one hole. For example, if a perforated electrode of which the distal end is ring-shaped is employed, the perforated electrode only has to be disposed so that the ring is substantially parallel with the electrodeposition coating film 4. Alternatively, a mesh electrode may be employed as the perforated electrode so that the mesh electrode is disposed substantially parallel with the electrodeposition coating film 4 in a state of the mesh electrode being embedded in the water-containing material 6.

### <<External Circuit>>

The external circuit 7 includes a wiring 71 and the current supplier 8 disposed on the wiring 71. The wiring 71 electrically connects the electrode 12 and the steel sheet 2 together. The wiring 71 may be any wiring that is publicly known.

### <<Current Supplier>>

The current supplier 8 is connected to the electrode 12 and the steel sheet 2 through the wiring 71, and serves as a power supply unit that supplies a power or applies a voltage and/or a current between the electrode 12 and the steel sheet 2. As will be described later, in the current supply step S3, the current supplier 8 applies a DC constant current or a DC constant voltage between the electrode 12 and the steel sheet 2 serving as an anode and a cathode, respectively.

The current supplier 8 also serves as a current detector/a voltage detector (detection unit) that detects a current and/or a voltage flowing therebetween when a voltage and/or a current is applied.

Specific examples of the current supplier 8 include a potentiostat/galvanostat that can control an applied voltage/current.

The current supplier 8 is electrically connected or wirelessly connected to the control device 9 described later, and is controlled by the control device 9. Current supply information such as a current value, a voltage value, and current supply time applied from the current supplier 8 to the external circuit 7 or detected by the current supplier 8 are transmitted to the control device 9 and stored in a storage unit 92.

### <<Control Device>>

The control device 9 is a device based on, for example, a known microcomputer, and includes a control unit 91, the storage unit 92, and an arithmetic unit 93. The control device 9 further includes an input unit 94 such as a keyboard, an output unit 95 such as a display, and a reading unit 96 configured to acquire information stored in various recording media.

The storage unit 92 stores information such as various types of data and arithmetic processing programs. The arithmetic unit 93 performs various types of arithmetic processing based on the information stored in the storage unit 92, the information input via the input unit 94, the information acquired from the various recording media via the reading unit 96, and the like. The control unit 91 outputs a control signal to a control target to perform various types of control based on the data stored in the storage unit 92, the arithmetic result of the arithmetic unit 93, and the like.

Here, the arithmetic unit 93 functions as a calculation unit that calculates the progress degree of the corrosion based on at least one of a temporal change in the current value, a temporal change in the voltage value, or a temporal change in the resistance value, where each temporal change occurs between the electrode 12 and the steel sheet 2 when the current supplier 8 applies the DC constant current or the DC constant voltage.

Specifically, if the current supplier 8 applies a constant current, the arithmetic unit 93 calculates the progress degree of corrosion based on a temporal change in the detected voltage value or a temporal change in the detected resistance value. If the current supplier 8 applies a constant voltage, the progress degree of corrosion is calculated based on a temporal change in the detected current value or a temporal change in the detected resistance value.

The temporal change in the resistance value is calculated from the Ohm's law based on a temporal change in the applied current value and a temporal change in the detected voltage value if the current supplier 8 applies a constant current and based on a temporal change in the detected current value and a temporal change in the applied voltage value if the current supplier 8 applies a constant voltage.

Various arithmetic processing results obtained by the arithmetic unit 93, such as information about a temporal change in the calculated resistance value and the progress degree of corrosion are stored in the storage unit 92.

### <<Other Configurations>>

Although not shown in FIG. 1, in order to increase and adjust the temperature of the water-containing material 6, particularly the water-containing material 6 near the test target portion, a temperature-increasing and temperature-adjusting unit, such as a rubber heater, a film heater, or the like, may be provided near the container 11 so as to surround the container 11 or may be provided on the electrodeposition coating film 4 of the coated metal material 1 outside the container 11. For the same purpose, a temperature-increasing and temperature-adjusting unit, such as a hot plate, a Peltier element, or the like, may be provided near the steel sheet 2 of the coated metal material 1. According to this configuration, it is possible to properly increase and adjust the temperatures of the water-containing material 6 and the coated metal material 1, and thus it is possible to promote the movement of ions and the permeation of water into the electrodeposition coating film 4, which enables corrosion to effectively progress. This allows the corrosion resistance test to be performed in shorter time with higher reliability. Further, the temperatures of the water-containing material 6 and the coated metal material 1 can be kept constant over desired testing time. This allows the corrosion resistance test to be performed under a predetermined temperature condition with higher reliability.

A temperature sensor (temperature detector) for detecting the temperature of the water-containing material 6 may be provided. Specific examples of the temperature sensor include a thermocouple, a fiber optic thermometer, an infrared thermometer, and the like. In the corrosion resistance test, the temperature of the water-containing material 6, particularly the temperature of the water-containing material 6 near the electrodeposition coating film 4 at the test target portion is important. Thus, if the temperature sensor is provided, a sensor unit is preferably provided so as to detect the temperature of the water-containing material 6 near the electrodeposition coating film 4.

It is preferable that the temperature-increasing and temperature-adjusting unit, the temperature sensor, and the like, are electrically or wirelessly connected to the control device 9 and controlled by the control device 9.

### <Corrosion Resistance Test Method for Coated Metal Material>

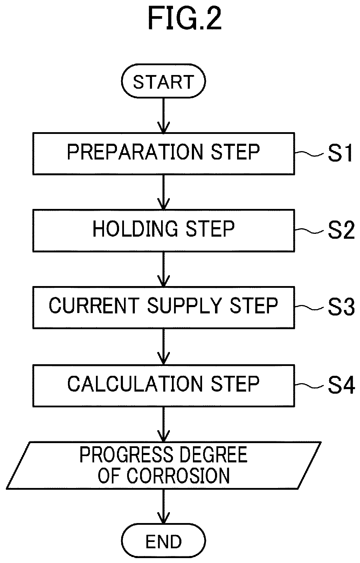

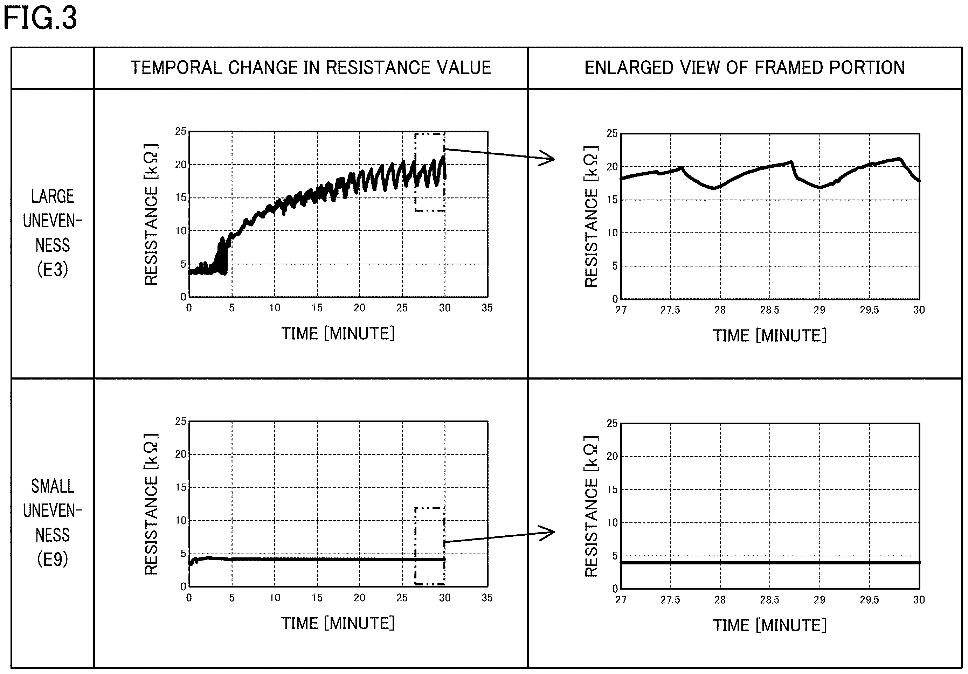

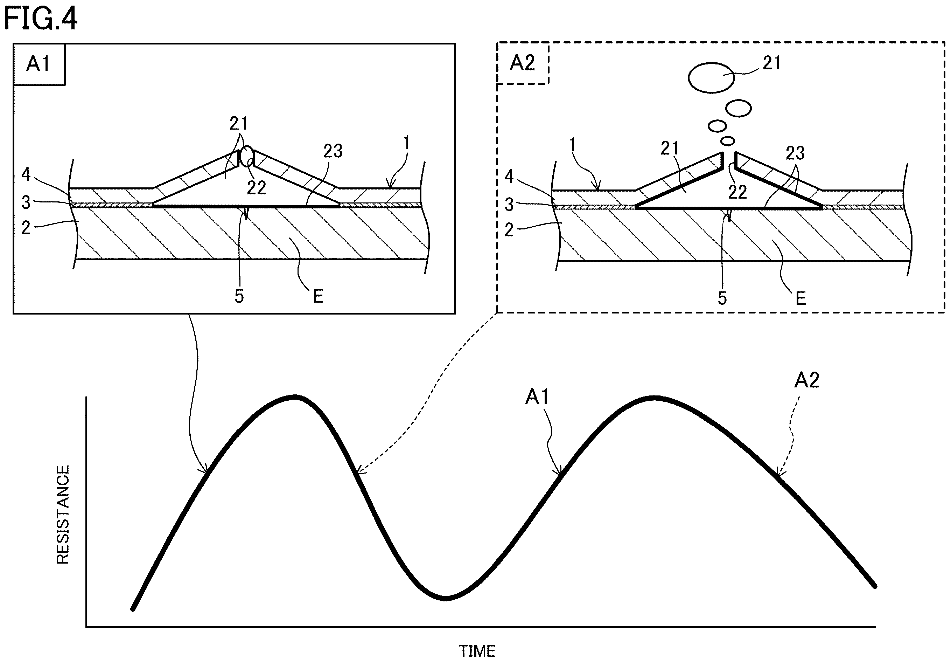

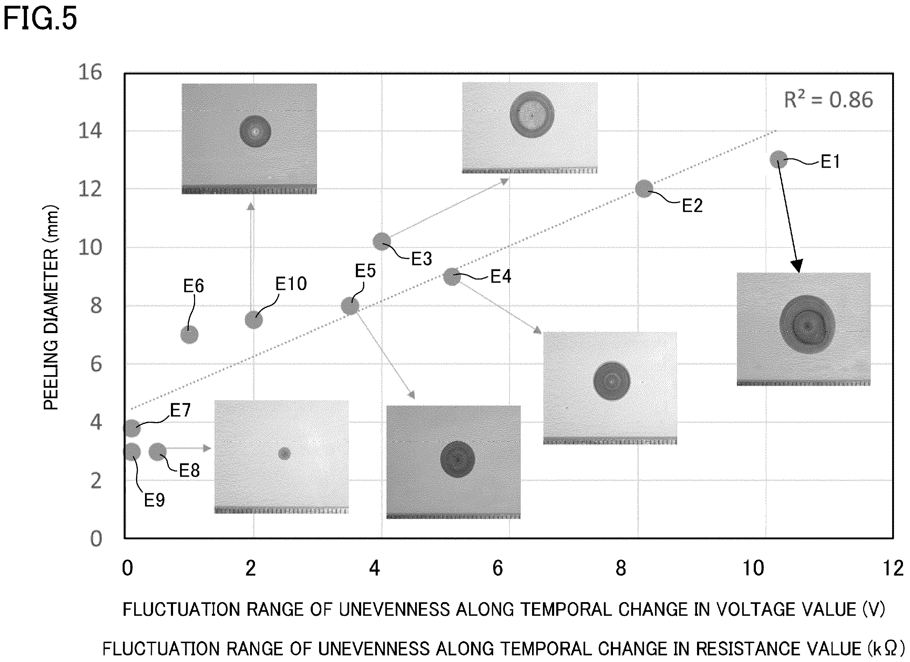

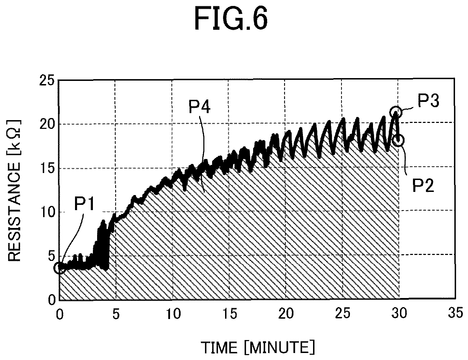

FIG. 2 is a flowchart for describing a corrosion resistance test method according to the present embodiment. FIG. 3 shows graphs each showing a temporal change in the resistance value of a test piece of the third or ninth experimental examples described later. FIG. 4 illustrates a mechanism for generating unevenness in a waveform along a temporal change in the resistance value. FIG. 5 is a graph showing the relationship between the fluctuation range of unevenness and the size of swelling for the test pieces of the first to tenth experimental examples. FIG. 6 is a graph showing a temporal change in the resistance value of the test piece of the third experimental example. The corrosion resistance test method according to the present embodiment will be described below with reference to FIGS. 2 to 6.

As illustrated in FIG. 2, the corrosion resistance test method includes a preparation step S1, an optional holding step S2, a current supply step S3, and a calculation step S4. Each step will be described below.

### <<Preparation Step>>

In the preparation step S1, the coated metal material 1 is prepared. Preferably, the coated metal material 1 having one damaged portion 5 reaching the steel sheet 2 through the electrodeposition coating film 4 and the chemical conversion coating 3 is prepared.

The damaged portion 5 of the coated metal material 1 is not necessarily formed, but is preferably formed for the following reasons. That is, if there is the damaged portion 5 reaching the steel sheet 2 through the electrodeposition coating film 4 and the chemical conversion coating 3, the water-containing material 6 if coming into contact with the damaged portion 5 enters the damaged portion 5, and then comes into contact with an exposed portion of the steel sheet 2 in the damaged portion 5. The damaged portion 5 allows creation of a simulated state at the end of a stage of occurrence of corrosion, i.e., at the end of a corrosion resistance period, in the process of corrosion of the coated metal material 1. This allows information on a corrosion progress rate to be efficiently obtained in the corrosion resistance test.

As described above, the damaged portion 5 may be a naturally damaged portion or an artificially damaged portion, and preferably an artificially damaged portion. By forming the damaged portion 5 artificially, the damaged portion 5 can be formed in a desired shape, size, and the like to some extent. Thus, the swelling of the electrodeposition coating film 4 progresses easily in the current supply step S3.

The damaged portion 5 may be a dot-shaped damaged portion or a linear damaged portion such as a cut made with a cutter, but is preferably a dot-shaped damaged portion. The "dot shape" means a shape such as a circular, a polygonal, or the like in a plan view, with a ratio between the maximum width and the minimum width of 2 or less. The dot-shaped damaged portion 5 allows the electrodeposition coating film 4 to be expanded effectively in a dome shape in response to the corrosion, thereby allowing the corrosion to be accelerated.

The artificially damaged portion 5 may be formed with any type of tool. The dot-shaped damaged portion 5 is formed preferably, for example, with an artificially damaging punch or an indenter of a Vickers hardness tester at a predetermined load in order to prevent variations in size and depth of the damaged portion 5, i.e., in order to form the damaged portion 5 quantitatively. For example, the linear damaged portion 5 other than the dot-shaped damaged portion 5 may be formed with a cutter or the like.

If the damaged portion 5 is in the dot shape, the diameter of the damaged portion 5 is preferably 0.1 mm or more to 7 mm or less, more preferably 0.2 mm or more to 5 mm or less, particularly preferably 0.3 mm or more to 1.5 mm or less. Regardless of the shape of the damaged portion 5, the area of the damaged portion 5 is preferably 0.01 mm² or more to 40 mm² or less, more preferably 0.02 mm² or more to 20 mm² or less, particularly preferably 0.05 mm² or more to 2 mm² or less.

In the above preferable range, the smaller the diameter or the area, the more the corrosion is accelerated in the current supply step S3. However, when the diameter is reduced to less than 0.1 mm (and/or the area is reduced to less than 0.01 mm²), the electrical conductivity is lowered and the cathode reaction is difficult to proceed. On the other hand, when the diameter exceeds 7 mm (and/or the area exceeding 40 mm²), the cathode reaction is unstable, and the progress of the swelling of the electrodeposition coating film 4 described later slows down. If the size of the damaged portion 5 is within the above range, the progress of the cathode reaction and the progress of the swelling of the electrodeposition coating film 4 are accelerated.

The container 11, the water-containing material 6, and the electrode 12 are disposed near the electrodeposition coating film 4 of the coated metal material 1. The water-containing material 6 is contained and held in the container 11, and is disposed in contact with the electrodeposition coating film 4, preferably in contact with the damaged portion 5, at the test target portion E of the coated metal material 1. The electrode 12 is disposed in contact with the water-containing material 6. The electrode 12 and the steel sheet 2 are electrically connected to each other through the external circuit 7.

Specifically, for example, the container 11 is placed first on the surface of the electrodeposition coating film 4 of the test piece of the coated metal material 1 through the seal material, preferably so as to surround the damaged portion 5; and then the container 11 is filled with the water-containing material 6. In this manner, the water-containing material 6 is brought into contact with the surface of the electrodeposition coating film 4, preferably brought into contact with the damaged portion 5. Then, the electrode 12 connected to one end of the wiring 71 is dipped in the water-containing material 6. The other end of the wiring 71 is connected to the steel sheet 2. Accordingly, the electrode 12 and the steel sheet 2 are electrically connected to each other through the external circuit 7.

The container 11 is preferably provided concentrically with the damaged portion 5. If a perforated electrode is used as the electrode 12, the electrode 12 is preferably provided so that its distal end 12a having a hole is parallel with the surface of the electrodeposition coating film 4 and so that the electrode 12 is concentric with the damaged portion 5.

### <<Holding Step>>

Prior to the subsequent current supply step S3, the holding step S2 of holding the water-containing material 6 for predetermined time with the water-containing material 6 disposed on the surface of the electrodeposition coating film 4 at the test target portion E may be provided. The predetermined time, i.e., holding time, is preferably 1 minute or more to 1 day or less, more preferably 10 minutes or more to 120 minutes or less, particularly preferably 15 minutes or more to 60 minutes or less.

Holding the water-containing material 6 on the surface of the electrodeposition coating film 4 can promote, in advance, permeation of the water-containing material 6 into the electrodeposition coating film 4, particularly movement of ions and permeation of water. This means that the simulated state in which the corrosion resistance period has ended is reproduced in the test target portion E to be closer to an actual corrosion process. Accordingly, corrosion of the coated metal material 1 progresses more smoothly in the subsequent current supply step S3, which can accelerate the progress of the swelling of the electrodeposition coating film 4 for evaluating the corrosion progress rate representing the progress of corrosion. This enables a reduction in the testing time and improvement in the reliability of the corrosion resistance test.

It is preferable in the holding step S2 and the current supply step S3 that the coated metal material 1 and/or the water-containing material 6 are heated and that the temperatures thereof are adjusted. The temperatures of the coated metal material 1 and/or the water-containing material 6 are preferably 30°C or more to 100°C or less, more preferably 50°C or more to 100°C or less, particularly preferably 50°C or more to 80°C or less. This allows acceleration of movement of ions and permeation of water into the electrodeposition coating film 4. Accordingly, the corrosion resistance test can be performed under the predetermined temperature condition with higher reliability.

### <<Current Supply Step>>

The current supply step S3 is a step of supplying, with the current supplier 8, a current between the electrode 12 and the steel sheet 2 serving as an anode and a cathode, respectively, as illustrated in FIG. 1 to cause corrosion of the steel sheet 2 to progress, preferably to cause corrosion of the steel sheet 2 to progress around the damaged portion 5.

**In** response to current supply between the electrode 12 serving as the anode and the steel sheet 2 serving as the cathode, the cathode reaction progresses in a contact portion between the water-containing material 6 and the steel sheet 2, preferably an exposed portion 5A of the steel sheet 2 at the damaged portion 5. Electrolysis of water also progresses and hydrogen is generated, depending on a current supply condition, that is, for example, under a current supply condition where a voltage equal to or higher than a theoretical voltage (1.23 V in a case where a system temperature is 25°C) at which electrolysis of water occurs to generate hydrogen, or a current requiring such a voltage, is applied.

As the cathode reaction progresses, the electrodeposition coating film 4 swells as described above. Further, hydrogen gas accelerates the swelling of the electrodeposition coating film 4.

The progress of the cathode reaction and the progress of the swelling of the electrodeposition coating film 4, preferably the progress of the cathode reaction and the progress of the swelling of the electrodeposition coating film 4 around the damaged portion 5, are accelerated reproduction of actual corrosion of the coated metal material 1. That is, the progress of the swelling of the electrodeposition coating film 4 is a simulated progress of corrosion of the coated metal material 1. In this way, the size of swelling of the electrodeposition coating film 4 or the rate of progress of the swelling at the time when predetermined time has elapsed from the start of current supply represents the progress degree of corrosion of the coated metal material 1. In particular, the rate of progress of the swelling of the electrodeposition coating film 4 corresponds to the corrosion progress rate in the above-described process of corrosion of the metal. Accordingly, the rate of progress of the swelling of the electrodeposition coating film 4, which is obtained as the progress degree of corrosion of the coated metal material 1, allows accurate evaluation of the corrosion resistance related to the corrosion progress rate of the coated metal material 1.

In the current supply step S3, current supply through the water-containing material 6 causes anions (e.g., Cl⁻) and cations (e.g., Na⁺) in the water-containing material 6 to move toward the steel sheet 2 through the electrodeposition coating film 4. Water is then drawn with these anions and cations and permeates into the electrodeposition coating film 4.

If the damaged portion 5 is formed, the electrode 12 disposed to surround the damaged portion 5 allows a voltage to be stably applied to the electrodeposition coating film 4 around the damaged portion 5. This leads to efficient movement of ions and efficient permeation of water into the electrodeposition coating film 4 at the time of current supply.

Current supply accelerates movement of ions and permeation of water into the electrodeposition coating film 4 in this manner. Thus, the flow of the current is rapidly stabilized. Accordingly, the progress of the swelling of the electrodeposition coating film 4 is stabilized.

In this manner, the present embodiment allows stable acceleration of the progress of the cathode reaction and the progress of the swelling of the electrodeposition coating film 4. This allows the corrosion resistance test for the coated metal material 1 to be performed accurately in a very short time.

In the current supply step S3, a DC constant current or a DC constant voltage, preferably a DC constant current, is applied between the electrode 12 and the steel sheet 2. This enables stable progress of corrosion, thus improving the reliability of the test.

The current value to be applied or detected in the current supply step S3 is preferably 10 µA or more to 10 mA or less, more preferably 100 µA or more to 5 mA or less, particularly preferably 500 µA or more to 2 mA or less. The current value less than 10 µA reduces accelerated reproducibility of the corrosion, and needs a long period of time for the test. On the other hand, the current value exceeding 10 mA makes the rate of the corrosion reaction unstable, which reduces the correlation with the progress of actual corrosion. Setting the current value within the above range achieves both a reduction in the testing time and an improvement in the reliability of the test.

The current supply time in the current supply step S3 may be, for example, 0.05 hours or more to 24 hours or less, preferably 0.1 hours or more to 10 hours or less, more preferably 0.1 hours or more to 5 hours or less, in order to shorten the testing time while obtaining the sufficient size of swelling of the coating film. The time for the holding step S2 may be preferably 0.1 hours or more to 1 hour or less.

In the current supply step S3, if the current supplier 8 applies a constant current, the current supplier 8 detects a temporal change in the voltage value. If the current supplier 8 applies a constant voltage, the current supplier 8 detects a temporal change in the current value.

### <<Calculation Step>>

In the calculation step S4, the progress degree of the corrosion is calculated based on at least one of a temporal change in the current value, a temporal change in the voltage value, or a temporal change in the resistance value, where each temporal change occurs between the electrode 12 and the steel sheet 2 when the current supplier 8 applies the DC constant current or the DC constant voltage.

Specifically, as described above, if the current supplier 8 applies a constant current, the progress degree of corrosion is calculated based on a temporal change in the detected voltage value or a temporal change in the detected resistance value. If the current supplier 8 applies a constant voltage, the progress degree of corrosion is calculated based on a temporal change in the detected current value or a temporal change in the detected resistance value. If the temporal change in the resistance value is used, the value calculated by the above-described method is used.

Preferably, in the current supply step S3, a constant current is applied, and the progress degree of corrosion is calculated based on the temporal change in the voltage value or the temporal change in the resistance value. This improves the accuracy of the test.

### [Method for Calculating Progress Degree of Corrosion]

Specifically, for example, the progress degree of corrosion can be calculated based on at least one of the fluctuation range of unevenness in a waveform along the temporal change; the difference between the values at any two points along the temporal change; and the integrated value from the start of current supply to the end of current supply along the temporal change.

An exemplary method for calculating the progress degree of corrosion based on the fluctuation range of unevenness in the waveform along the temporal change in the resistance value will be described below.

When a DC constant current was applied between the electrode 12 and the steel sheet 2 of a test piece of the third experimental example described later, minute fluctuations (also referred to as "unevenness") in the resistance value were observed in the waveform along the temporal change in the resistance value as shown in the upper graphs in FIG. 3. The unevenness had a periodicity, and the fluctuation range tended to gradually increase as time passed. **In** contrast, in the ninth experimental example, the fluctuation range of unevenness is extremely small, and it was difficult to visually recognize the unevenness even in the enlarged one of the lower graphs in FIG. 3.

A mechanism for generating such unevenness in the waveform along the temporal change in the resistance value has been studied. As shown in the diagram A1 of FIG. 4, as the swelling of the electrodeposition coating film 4 progresses, hydrogen gas 21 is generated on a contact portion between the film 23 of the water-containing material 6 and the steel sheet 2 at the test target portion E. The hydrogen gas 21 accumulates between the lifted electrodeposition coating film 4 and the steel sheet 2 and blocks a break 22 in the electrodeposition coating film 4. Accordingly, the amount of the water-containing material 6 interposed between the electrode 12 and the steel sheet 2 decreases, and the resistance value therebetween increases as time passes as shown in the graph of the lower part of FIG. 4. When the hydrogen gas has fully accumulated, an upward force exerted by the hydrogen gas exceeds the resistance of the electrodeposition coating film 4, and thus the hydrogen gas 21 accumulating between the electrodeposition coating film 4 and the steel sheet 2 escapes out of the break 22 of the electrodeposition coating film 4 as shown in the diagram A2. Accordingly, the water-containing material 6 is guided to the inner side surface of the electrodeposition coating film 4 and flows into the gap between the electrodeposition coating film 4 and the steel sheet 2. Then, due to the film 23 of the water-containing material 6, the amount of the water-containing material 6 interposed between the electrode 12 and the steel sheet 2 increases, and the resistance therebetween decreases as time passes as shown in the graph of the lower part of FIG. 4. **In** other words, it is conceivable that the unevenness in the waveform along the temporal change in the resistance value reflects the timing of escape of the hydrogen gas 21. Then, it is conceivable that since the time during which the hydrogen gas 21 accumulates becomes longer as the size of swelling of the electrodeposition coating film 4 increases, the fluctuation range of unevenness increases as the swelling of the electrodeposition coating film 4 progresses.

That is, since the unevenness in the waveform along the temporal change in the resistance value of the test piece of the third experimental example in FIG. 3 is larger than the unevenness of the ninth experimental example, it can be estimated that the size of swelling of the electrodeposition coating film 4 of the test piece of the third experimental example after a fixed time has lapsed since the start of the test is larger than the size of the test piece of the ninth experimental example. In other words, it can be estimated that the corrosion progress rate of the electrodeposition coating film 4 of the test piece of the third experimental example is higher than the corrosion progress rate of the electrodeposition coating film 4 of the test piece of the ninth experimental example.

That is, it is conceivable that there is a correlation between the fluctuation range of unevenness in the waveform along the temporal change in the resistance value and the size of swelling of the electrodeposition coating film 4. In fact, it has been found that as shown in FIG. 5, each test piece of the first to tenth experimental examples described later has a proportional correlation between the fluctuation range of unevenness in the waveform along the temporal change in the resistance value calculated by the method described later and the size of swelling of the electrodeposition coating film 4.

Thus, if the correlation between the fluctuation range of unevenness and the size of swelling of the electrodeposition coating film 4 as shown in, for example, FIG. 5 is acquired in advance according to an experimental method or an analytical method, the size of swelling of the electrodeposition coating film 4 can be calculated based on the fluctuation range of unevenness in the waveform along the temporal change acquired in the current supply step and the correlation at issue. In addition, for example, the corrosion progress rate (the rate at which the swelling progresses) can be calculated by dividing the calculated size of swelling or the difference between the size of swelling and the size of the damaged portion by the current supply time. Further, if the correlation between the fluctuation range of unevenness and the corrosion acceleration rate is acquired in advance by calculating the corrosion acceleration rate by dividing the size of swelling of the electrodeposition coating film 4 or the difference between the size of swelling and the size of the damaged portion by the current supply time according to an experimental method or an analytical method, the corrosion acceleration rate can be calculated based on the fluctuation range of unevenness in the waveform along the temporal change acquired in the current supply step and the correlation at issue.

In this way, according to this configuration, the corrosion acceleration and the progress degree of corrosion can be calculated together, which can advantageously shorten the testing time and also can eliminate measurement errors occurring in a typical test method. Thus, the reliability and versatility of the corrosion resistance test can be improved.

Here, specifically, for example, the fluctuation range of unevenness can be calculated according to the following procedure, although not intended to limitation. That is, from the data on the temporal change in the resistance value, some resistance values appearing during a predetermined period from a first time to a second time (for example, the time when the current supply ends), where the time when the current supply starts is defined as zero, are extracted. Here, assume that a data point of which the resistance value is higher than the resistance values immediately prior and immediately subsequent in the axis of time is defined as a peak, and a data point of which the resistance value is lower than the resistance values immediately prior and immediately subsequent in the axis of time is defined as a trough. Then, from the data on the resistance values appearing during the predetermined period, peaks and troughs are extracted, where the difference between the resistance value of the peak and the resistance of the trough is more than or equal to a predetermined value. Among those extracted peaks and troughs, a set of a peak and a trough adjacent to each other in the axis of time is defined as one uneven part. The difference in resistance value between the peak and the trough constituting the uneven part is defined as the fluctuation range of the uneven part. Then, for example, the average value, the maximum value, the minimum value, or the like of the plurality of fluctuation ranges of the uneven parts obtained from the data points appearing during the predetermined period is defined as a fluctuation range of the unevenness at the second time (for example, the time when the current supply ends) in the coated metal material 1 as a test target.

Although not particularly limited, the first time is preferably the time when a stable chemical reaction proceeds, and, for example, the time when two minutes or more, preferably 10 minutes or more, further preferably 20 minutes or more have elapsed since the current supply started. Although not particularly limited, the second time may be, for example, the time of two minutes or more after the first time, preferably the time of 10 minutes or more after the first time; or may be the time when the current supply ends. The predetermined period may be, for example, two minutes or more, preferably five minutes or more.

The set of the peak and the trough constituting the one uneven part described above consists of data points where either one of the peak and the trough may be prior to the other in the axis of time. The set of the peak and the trough constituting one uneven part is preferably not included in the set of a peak and a trough constituting another uneven part. If the total number of extracted peaks and troughs is odd, the uneven part may be set from the first time side, or may be set from the second time side.

The predetermined value described above is set in order to remove extremely minute fluctuations as noise in the resistance value resulting from, for example, a measurement environment and the like, and is not particularly limited as long as the noise can be removed. The predetermined value may be set to any value by a user, and may be set to, for example, a value of a predetermined percentage, for example, 50% to 95%, of the maximum value of the calculated difference between the resistance value of the peak and the resistance value of the trough.

The method for calculating the fluctuation range of the unevenness is not limited to the above method, and a generally known numerical analysis method or a statistical method such as machine learning by artificial intelligence (AI) to identify a waveform may be employed.

In the above description, the temporal change in the resistance value was employed as an example; but if a constant current is applied, the temporal change in the voltage value may be employed, and if a constant voltage is applied, the temporal change in the current value may be employed.

Further, the progress degree of corrosion may be calculated not based on the fluctuation range of unevenness in a waveform along the temporal change but based on the difference between the values at any two points in the temporal change or based on the integrated value from the start of current supply to the end of current supply in the temporal change.

Specifically, as shown in FIG. 6, the difference between the resistance values at any two points in the temporal change, such as the difference between the resistance value P1 at the start of current supply and the resistance value P2 at the end of current supply; the difference between the resistance value P1 at the start of current supply and the maximum value P3; or the like, also has a correlation with the progress degree of corrosion, and can also be used just like the fluctuation range of the unevenness. These two points are preferably two points apart to some extent from each other on the axis of time, such as the time when the current supply starts and the time when 5 minutes, preferably 10 minutes, more preferably 20 minutes have lapsed since the current supply started.

As shown in FIG. 6, an integrated value P4 from the start of current supply to the end of current supply in of the temporal change also has a correlation with the progress degree of corrosion, and can also be used just like the fluctuation range of the unevenness.

### <Experimental Examples>

Actual experiments will be described below.

### [Preparation of Test Piece]

First, a test piece (also referred to as "TP") of the coated metal material 1 used in the corrosion resistance test of each experimental example was produced. The specifications of the test pieces are shown in Table 1.

**[Table 1]**

| EXPERIMENTAL EXAMPLE | REFERENCE ChARAC-TER | STEL GRADE OF STEEL SHEET | COATING CONDITION | | | | EVALUATION RESULT | | |
|---|---|---|---|---|---|---|---|---|---|
| | | | CHEMICAL CONVERSION (SECOND) | BAKING | | FILM THICKNESS (µm) | FLUCTUATION RANGE OF UNEVENNESS | | PEELING DIAMETER (mm) |
| | | | | TEMPERATURE (°C) | TIME (MINUTE) | | VOLTAGE VALUE | RESTSTAN-CE VALUE | |
| | | | | | | | (V) | (kΩ) | |
| 1 | E1 | | 10 | 140 | 15 | | 10.2 | 10.2 | 13.0 |
| 2 | E2 | | 30 | | | | 8.1 | 8.1 | 12.0 |
| 3 | E3 | | 120 | | | | 4.0 | 4.0 | 10.2 |
| 4 | E4 | | 10 | | 20 | | 5.1 | 5.1 | 9.0 |
| 5 | E5 | SPC | 30 | | | 10 | 3.5 | 3.5 | 8.0 |
| 6 | E6 | | 120 | | | | 1.0 | 1.0 | 7.0 |
| 7 | E7 | | 10 | 150 | | | 0.1 | 0.1 | 3.8 |
| 8 | E8 | | 30 | | | | 0.5 | 0.5 | 3.0 |
| 9 | E9 | | 120 | | | | 0.1 | 0.1 | 3.0 |
| 10 | E10 | GA | 120 | 140 | | | 2.0 | 2.0 | 7.5 |

The metal base obtained by forming a zinc phosphate coating as the chemical conversion coating 3 on the surface of the flat steel sheet 2 was used. The term "chemical conversion" in Table 1 represents chemical conversion treatment time for forming the zinc phosphate coating. An electrodeposition coating film 4 made of an epoxy-based resin was formed as the surface treatment film. Three electrodeposition baking conditions were prepared: 140°C × 15 minutes; 140°C × 20 minutes; and 150°C × 20 minutes. The thickness of the electrodeposition coating film 4 was about 10 µm.

The damaged portion 5 was artificially formed on the surface of the TP on which the electrodeposition coating film 4 is formed, using a Vickers hardness tester with a load of 30 kg. The surface of each test piece was observed with a digital microscope, and the size (maximum diameter) of the damaged portion 5 measured before the current supply on the acquired image data was 0.8 mm to 0.9 mm.

### [Corrosion Resistance Test]

The corrosion resistance test was performed using the apparatus illustrated in FIG. 1. Specifically, the TP was maintained in a static condition for 30 minutes in the environment where the temperature of the water-containing material 6 was 65°C, and then, a DC constant current of 1 mA was applied at the same temperature for 30 minutes. As the water-containing material 6, simulated mud (composition: water 1.2 L; kaolinite 1 kg; sodium sulfate 50 g; sodium chloride 50 g; calcium chloride 50 g) was used.

Then, the temporal change in the voltage value that occurs between the electrode 12 and the steel sheet 2 when a constant current was applied was detected. The temporal change in the resistance value was calculated based on the temporal change in the voltage value and the temporal change in the applied current value. FIG. 3 shows an example of the temporal change in the resistance value in each of the third and ninth experimental examples.

### [Calculation of Range of Fluctuation Range]

In each of the temporal change in the voltage value and the temporal change in the resistance value, the fluctuation range of unevenness for five minutes from the time when 25 minutes elapsed to the time when 30 minutes elapsed (or when the current supply ended) since the application of a constant current had started was calculated by the above method.

Specifically, for example, in the temporal change in the resistance value, some resistance values appearing for five minutes from the time when 25 minutes elapsed (the first time) to the time when 30 minutes elapsed, i.e., the time when the current supply ended (the second time), where the time when the current supply had started was defined as zero, were extracted. Here, assume that a data point of which the resistance value is higher than the resistance values immediately prior and immediately subsequent in the axis of time is defined as a peak, and a data point of which the resistance value is lower than the resistance values immediately prior and immediately subsequent in the axis of time is defined as a trough. Then, from the data on the resistance values for five minutes, peaks and troughs were extracted, where the difference between the resistance value of the peak and the resistance of the trough was more than or equal to a predetermined value. Among those extracted peaks and troughs, a set of a peak and a trough adjacent to each other in the axis of time was defined as one uneven part. If the total number of extracted peaks and troughs was odd, the uneven part was set from the time side when the current supply ended. The difference in resistance value between the peak and the trough constituting the uneven part was defined as the fluctuation range of the uneven part. Then, for example, the average value of the plurality of fluctuation ranges of the uneven parts (four uneven parts in the third experimental example) obtained from the data points for five minutes was defined as a fluctuation range of the unevenness of the test piece at the time when the current supply ended. The predetermined value was set to a value of 85% of the maximum value of the calculated difference between the resistance value of the peak and the resistance value of the trough.

### [Acquisition of Correlation]

After the current supply ended in the corrosion resistance test, the simulated mud was removed, and the surface of the TP was cleaned with water. Thereafter, after the swollen portion of the electrodeposition coating film 4 was removed with the adhesive tape, the surface of the test piece was observed with a digital microscope, and the peeling diameter was measured on the acquired image data.

Then, the peeling diameters were plotted with respect to the fluctuation range of the unevenness calculated as described above. The results are shown in FIG. 5. The fitting results show that there is a proportional correlation between the peeling diameter and the fluctuation range of the unevenness (the coefficient of determination R² = 0.86).

That is, the experiment shows that the progress degree of corrosion can be calculated based on the fluctuation range of unevenness and the above correlation.

Acquiring the correlation between the fluctuation range of unevenness and the corrosion acceleration rate only requires calculating the corrosion acceleration rate by dividing the difference between the peeling diameter and the maximum diameter of the damaged portion by the current supply time; plotting the corrosion acceleration rates with respect to the fluctuation range of unevenness; and conducting a fitting process.

### <Corrosion Resistance Test Program and Recording Medium for The Corrosion Resistance Test Program>

At least some of the steps of the corrosion resistance test method described above are programmed as a corrosion resistance test program. Specifically, the corrosion resistance test program according to the present embodiment is a program that causes a computer to execute at least the processes of the calculation step S4, preferably the processes of the current supply step S3 and the processes of the calculation step S4, among the above-described steps. The corrosion resistance test program can be executed by the control unit 91 and the arithmetic unit 93 while being stored in the storage unit 92. The corrosion resistance test program may be stored in the storage unit 92, and may be recorded in various types of known computer-readable recording media, such as an optical disk medium and a magnetic tape medium. The recording medium is attached to the reading unit 96 of the control device 9, and the corrosion resistance test program is read out, thereby making it possible to execute the program.

According to this configuration, the highly reliable corrosion resistance test can be performed by the computer executing at least the processes of the calculation step S4.

### (Second Embodiment)

Other embodiments of the present disclosure will be described in detail below. In the description of these embodiments, the same reference characters as those in the first embodiment are used to represent equivalent elements, and the detailed explanation thereof will be omitted.

In the first embodiment, the test method of supplying a current between the electrode 12 and the steel sheet 2 has been described as an example, but the method is not limited thereto.

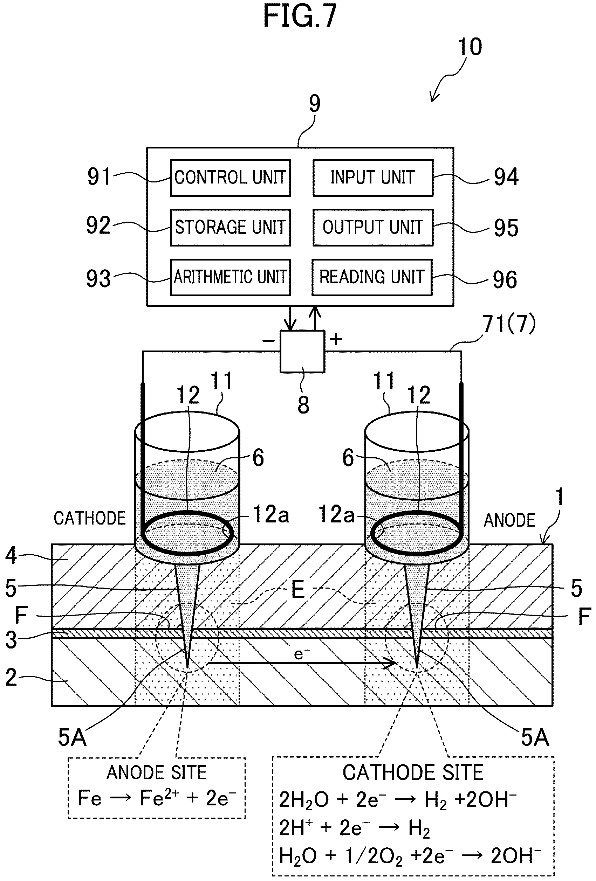

As illustrated in FIG. 7, a test method using the two containers 11, each of which is provided with of the water-containing material 6 and the electrode 12, where a current is supplied between the two electrodes 12, may be employed.

In this case, in the preparation step S1, the two containers 11 and the two electrodes 12 in contact with the water-containing materials 6 in the two containers are disposed, and the two electrodes 12 are electrically connected to each other through an external circuit.

As illustrated in FIG. 7, the coated metal material 1 may have two damaged portions reaching the steel sheet 2 through the electrodeposition coating film 4 at two test target portions E. In this case, the two containers 11 are disposed so that the water-containing materials 6 are in contact with the two damaged portions.

In the present embodiment, the corrosion resistance test apparatus 10 includes the two containers 11; the two electrodes in contact with the water-containing materials 6 contained in the two containers; and the external circuit electrically connecting the two electrodes together.

In the current supply step S3, the current supplier 8 supplies a current between the two electrodes, one of which serves as an anode and the other one of which serves as a cathode. This step causes the corrosion of the coated metal material 1 to progress.

In FIG. 7, for example, the electrode 12 on the left is a cathode, and the electrode 12 on the right is an anode. In this case, the test target portion E, preferably the damaged portion 5, on the left is an anode site, and the test target portion E, preferably the damaged portion 5, on the right is a cathode site.

At the anode site, the anode reaction progresses whereas the cathode reaction less progresses, and thus, almost no swelling of the electrodeposition coating film 4 occurs.

On the other hand, at the cathode site, swelling of the electrodeposition coating film 4 progresses. In this way, the progress degree of corrosion of the coated metal material 1 can be evaluated by evaluation of the size of swelling or the progress rate of swelling of the electrodeposition coating film 4 at the cathode site at the time when a predetermined time has elapsed from the start of current supply.

The cathode reaction may also progress at the anode site depending on the conditions such as the size, shape, and the like of the damaged portion 5; and the value of current supplied by the current supplier 8. Specifically, in the present embodiment, the damaged portion 5 at which the anode reaction progresses and the damaged portion 5 at which the cathode reaction progresses out of the two damaged portions 5 are suitably separated, but may not be separated clearly. In this case, the swelling of the electrodeposition coating film 4 may also progress at the anode site. In such a case, the swelling of the electrodeposition coating film 4 may progress at both of the two damaged portions 5. Thus, in the calculation step S4, the progress degree of corrosion of the coated metal material 1 only has to be calculated based on the damaged portion 5 with larger swelling of the electrodeposition coating film 4.

In this manner, according to the present embodiment, the current supply enables separation between the anode site at which the anode reaction progresses and the cathode site at which the cathode reaction progresses, and also enables stable acceleration of the progress of both reactions and the progress of the swelling of the electrodeposition coating film 4. Thus, the corrosion resistance test for the coated metal material 1 can be performed accurately in a very short time.

Similarly to the first embodiment, it is preferable to apply a DC constant current or a DC constant voltage, preferably a DC constant current, between the two electrodes 12.

The value of current flowing between the two electrodes 12 is preferably similar to the value of the first embodiment.

If the damaged portions 5 are formed, at least one of the two damaged portions 5 is preferably in a dot shape. the damaged portion 5 with a larger size of swelling of the electrodeposition coating film 4 is preferably formed in the dot shape in this preparation step S1. Further, the damaged portion 5 at which the cathode reaction progresses in the current supply step S3, i.e., the damaged portion 5 as a cathode site is preferably formed in the dot shape. In this case, the shape of the damaged portion 5 as an anode site is not particularly limited, and may be a dot shape or may be a linear shape such as a cut made with a cutter, for example.

The distance between the two damaged portions 5 is preferably 2 cm or more, more preferably 3 cm or more in order to easily check the swelling of the electrodeposition coating film 4.

The progress degree of corrosion obtained by the test method in FIG. 7 also only has to be calculated based on at least one of the temporal change in the current value, the temporal change in the voltage value, and the temporal change in the resistance value. Accordingly, the corrosion acceleration and the progress degree of corrosion can be calculated together, which can advantageously shorten the testing time and also can eliminate measurement errors. Accordingly, the accuracy, reliability, and versatility of the corrosion resistance test can be enhanced.

The present disclosure is very useful, because, in the corrosion resistance test for the coated metal material, the testing time can be further shortened and the measurement errors can be reduced.

### DESCRIPTION OF REFERENCE CHARACTERS

- 1: Coated Metal Material
- 2: Steel Sheet (Metal Base)
- 3: Chemical Conversion Coating (Metal Base)
- 4: Electrodeposition Coating Film (Surface Treatment Film)
- 5: Damaged Portion
- 6: Water-containing Material
- 7: External Circuit
- 8: Current Supplier (Power Supply Unit, Detector)
- 9: Control Device (Calculation Unit)
- 10: Corrosion Resistance Test Apparatus
- 11: Container
- 12: Electrode
- 21: Hydrogen Gas
- 23: Film of Water-containing Material
- E: Test Target Portion
- S1: Preparation Step
- S3: Current supply Step
- S4: Calculation Step

## Claims

1. A corrosion resistance test method for a coated metal material (1) including a metal base (2, 3) and a surface treatment film (4) provided on the metal base (2, 3), the method comprising:
a preparation step (S1) of arranging one or two containers (11) holding a water-containing material (6) such that the water-containing material (6) is in contact with the surface treatment film (4) at a test target portion (E) of the coated metal material (1) and one electrode (12) in contact with the water-containing material (6) in the one container (11) or two electrodes (12) in contact with the respective water-containing materials (6) in the two containers (11), and electrically connecting, through an external circuit (7), the electrode (12) and the metal base (2, 3) to each other or the two electrodes (12) to each other;
a current supply step (S3) of applying a DC constant current or a DC constant voltage, with a current supplier (8) provided on the external circuit (7), between the electrode (12) serving as an anode and the metal base (2, 3) serving as a cathode or between one of the two electrodes (12) serving as an anode and the other one of the two electrodes (12) serving as a cathode to cause corrosion of the coated metal material (1) to progress; and
a calculation step (S4) of calculating a progress degree of the corrosion based on at least one of a temporal change in a current value, a temporal change in a voltage value, or a temporal change in a resistance value, where each temporal change occurs between the electrode (12) and the metal base (2, 3) or between the one of and the other one of the two electrodes (12) when the DC constant current or the DC constant voltage is applied in the current supply step (S3).

2. The method of claim 1, wherein
in the calculation step (S4), the progress degree of corrosion is calculated based on at least one of a fluctuation range of unevenness in a waveform along the temporal change; a difference between values at any two points along the temporal change; and an integrated value from a start of current supply to an end of current supply along the temporal change.

3. The method of claim 2, wherein
in the current supply step (S3), progress of the corrosion of the coated metal material (1) appears as swelling of the surface treatment film (4), and
in the calculation step (S4), the progress degree of corrosion is calculated based on a correlation among at least one of the fluctuation range of unevenness, the difference between the values at the two points, or the integrated value; at least one of the fluctuation range of unevenness acquired in advance, the difference between the values at the two points acquired in advance, or the integrated value acquired in advance; and a size of swelling of the surface treatment film (4) or a rate at which the swelling progresses.

4. The method of claim 1 or 2, wherein
the coated metal material (1) has, at the test target portion (E), one or two damaged portions reaching the metal base (2, 3) through the surface treatment film (4), and
the one or two containers (11) are disposed such that the water-containing material (6) is in contact with the one damaged portion or the two damaged portions.

5. The method of claim 4, wherein
in the current supply step (S3), progress of the corrosion of the coated metal material (1) appears as swelling of the surface treatment film (4) that occurs around the damaged portion, and
the progress degree of corrosion is expressed by a size of swelling of the surface treatment film (4) or a rate at which the swelling progresses.

6. The method of anyone of claims 1 to 5, wherein
the surface treatment film (4) is a resin coating film.

7. A corrosion resistance test apparatus for a coated metal material (1) including a metal base (2, 3) and a surface treatment film (4) provided on the metal base (2, 3), the apparatus comprising:
one or two containers (11) holding a water-containing material (6) such that the water-containing material (6) is in contact with the surface treatment film (4) at a test target portion (E) of the coated metal material (1);
one electrode (12) in contact with the water-containing material (6) in the one container (11) or two electrodes (12) in contact with the respective water-containing materials (6) in the two containers (11);
an external circuit (7) electrically connecting the electrode (12) and the metal base (2, 3) to each other or the two electrodes (12) to each other;
a current supplier (8) provided on the external circuit (7) to apply a DC constant current or a DC constant voltage between the electrode (12) serving as an anode and the metal base (2, 3) serving as a cathode or between one of the two electrodes (12) serving as an anode and the other one of the two electrodes (12) serving as a cathode to cause corrosion of the coated metal material (1) to progress; and
a calculation unit (9) configured to calculate a progress degree of the corrosion based on at least one of a temporal change in a current value, a temporal change in a voltage value, or a temporal change in a resistance value, where each temporal change occurs between the electrode (12) and the metal base (2, 3) or between the one of and the other one of the two electrodes (12) when the DC constant current or the DC constant voltage is applied.

8. The corrosion resistance test apparatus of claim 7, wherein
the calculation unit (9) calculates the progress degree of corrosion based on at least one of a fluctuation range of unevenness in a waveform along the temporal change; a difference between values at any two points along the temporal change; and an integrated value from a start of current supply to an end of current supply along the temporal change.

9. The corrosion resistance test apparatus of claim 8, wherein
progress of the corrosion of the coated metal material (1) appears as swelling of the surface treatment film (4), and
the calculation unit (9) calculates the progress degree of corrosion based on a correlation among at least one of the fluctuation range of unevenness, the difference between the values at the two points, or the integrated value; at least one of the fluctuation range of unevenness acquired in advance, the difference between the values at the two points acquired in advance, or the integrated value acquired in advance; and a size of swelling of the surface treatment film (4) or a rate at which the swelling progresses.

10. A program for a corrosion resistance test of a coated metal material (1) including a metal base (2, 3) and a surface treatment film (4) provided on the metal base (2, 3),
the corrosion resistance test including:
a preparation step (S1) of arranging one or two containers (11) holding a water-containing material (6) such that the water-containing material (6) is in contact with the surface treatment film (4) at a test target portion (E) of the coated metal material (1) and one electrode (12) in contact with the water-containing material (6) in the one container (11) or two electrodes (12) in contact with the respective water-containing materials (6) in the two containers (11), and electrically connecting, through an external circuit (7), the electrode (12) and the metal base (2, 3) to each other or the two electrodes (12) to each other;
a current supply step (S3) of applying a DC constant current or a DC constant voltage, with a current supplier (8) provided on the external circuit (7), between the electrode (12) serving as an anode and the metal base (2, 3) serving as a cathode or between one of the two electrodes (12) serving as an anode and the other one of the two electrodes (12) serving as a cathode to cause corrosion of the coated metal material (1) to progress; and
a calculation step (S4) of calculating a progress degree of the corrosion based on at least one of a temporal change in a current value, a temporal change in a voltage value, or a temporal change in a resistance value, where each temporal change occurs between the electrode (12) and the metal base (2, 3) or between the one of and the other one of the two electrodes (12) when the DC constant current or the DC constant voltage is applied in the current supply step (S3),
the program causing a computer to execute a process of at least the calculation step (S4).

11. A computer-readable recording medium in which the program of the corrosion resistance test of the coated metal material (1) of claim 10 is recorded.
